# EUROPÄISCHE PATENTANMELDUNG

(11) **EP 3 528 232 A1**
(43) Veröffentlichungstag der Anmeldung: **21.08.2019**
(21) Anmeldenummer: 19157999.4
(22) Anmeldetag: 19.02.2019
(51) Int. Cl.: G09B 9/46, G09B 9/12

(54) **TRAININGSSIMULATOR FÜR EIN FLUGGERÄT**

(30) Priorität: 19.02.2018 DE 102018103617
(71) Anmelder: Lankes, Markus, 12487 Berlin (DE)
(72) Erfinder: LANKES, Markus, 12487 Berlin (DE)
(74) Vertreter: Brandt & Nern Patentanwälte

(57) **Zusammenfassung**

Die Erfindung betrifft einen Trainingssimulator für ein Fluggerät, mit einem bewegbaren Fluggerätekörper (1), der an einer Traverse (3) einer Verfahreinrichtung (2) aufgehängt ist, mittels welcher der Fluggerätekörper (1) in einer horizontalen Ebene frei bewegbar ist. Die Verfahreinrichtung (2) weist zur Ausführung von Längs- und Querbewegungen des Fluggerätekörpers (1) direkt lineare Antriebe auf. Der Fluggerätekörper (1) ist mit der Traverse (3) über eine ihm zumindest vertikale Bewegungen relativ zu der Traverse (3) ermöglichende Lifteinrichtung (4) verbunden. An die Lifteinrichtung (4) wiederum ist der Fluggerätekörper (1) dabei über eine Tragkonstruktion (5, 5') und über eine mindestens zwei Freiheitsgrade für den Fluggerätekörper (1) zur Verfügung stellende sowie ein Mehrachsenbewegungssystem ausbildende Bewegungskonstruktion (6) dynamisch bewegbar und belastbar angekoppelt. Der Fluggerätekörper (1) verfügt hierdurch in Bezug auf die ihm zur Simulation von Flugmanövern ermöglichten Bewegungen über insgesamt sechs dynamisch unterstützbare physikalische Freiheitsgrade.

## Beschreibung

Die Erfindung betrifft einen vorzugsweise den Teil einer Übungs- beziehungsweise eine Testanlage ausbildenden Trainingssimulator für das Training der Nutzung oder/und von Flugmanövern eines Fluggerätes. Sie bezieht sich hierbei vorzugsweise auf das Training von Hubschrauberbesatzungen und dabei insbesondere auf das Training von Hubschrauberbesatzungen für Rettungseinsätze, wie beispielsweise für entsprechende Einsätze von Rettungskräften im Gebirge. Jedoch ist die Erfindung nicht auf das Training von Hubschrauberbesatzungen beschränkt. Vielmehr betrifft die Erfindung allgemein das Training an oder in Fluggeräten im Grunde beliebiger Art, wobei dies selbst unbemannte Fluggeräte einschließt. Das Training von Hubschrauberbesatzungen stellt insoweit lediglich einen bevorzugten Einsatzzweck dar. Gegenstand der Erfindung ist ein Trainingssimulator, welcher durch einen speziellen Aufbau von Einrichtungen zur Bewegung eines, einem originären Fluggerät oder einem Teil davon entsprechenden oder diesem nachgebildeten Fluggerätekörpers ein sehr realitätsnahes Training der Nutzung oder/und von Flugmanövern eines entsprechenden Fluggerätes in einer simulierten Umgebung ermöglicht.

Aus Kosten- und Sicherheitsgründen werden Personen, die bei der Ausübung ihrer beruflichen Tätigkeit ein Fahrzeug führen, und gegebenenfalls zugehörige Besatzungsmitglieder, nämlich insbesondere Piloten und Besatzungsmitglieder von Luftfahrzeugen, vielfach in dafür ausgebildeten Simulationssystemen geschult und trainiert. Entsprechende Simulationssysteme lassen es dabei auch zu, das Verhalten in Gefahrensituationen zu trainieren, deren Auftreten man unter realen Bedingungen aus Sicherheitsgründen nicht provozieren möchte, da niemand zu Trainingszwecken die Gesundheit oder das Leben von Menschen riskieren möchte. Das Training in Simulatoren hat zudem den Vorteil, dass immer wieder reproduzierbare Trainingssituationen geschaffen werden können, so dass die Trainingsergebnisse unterschiedlicher Besatzungen objektiv miteinander verglichen werden können und bei den unterschiedlichen Besatzungen von einem gleichen Trainingsstand ausgegangen werden kann.

Ungeachtet dessen kommt es aber beim Einsatz von Simulatoren für das Training darauf an, eine möglichst realitätsnahe Trainingsumgebung bereitzustellen, mit deren Hilfe insbesondere auch der Umgang mit Gefahrensituationen simuliert werden kann, deren Eintreten sich in der Realität niemand wünscht, die aber dennoch in der Praxis und hier zumeist völlig unerwartet immer eintreten können. Entsprechendes gilt für das Training von Piloten und sonstigen Besatzungsmitgliedern von Luftfahrzeugen, wobei die vorgenannten Personen nachfolgend zusammenfassend und vereinfachend allgemein als Besatzung bezeichnet werden sollen.

Zur Simulation von Flugbewegungen sind Simulatoren bekannt geworden und im Einsatz, welche auf einer sich am Boden befindlichen Konstruktion mit Bewegungseinrichtungen basieren, die eine Simulationskabine in unterschiedliche Richtungen bewegen und neigen können. Eine solche Vorrichtung wird beispielsweise in der US 2012/0180592 A1 beschrieben. Simulatoren dieser Art werden auch beim Hubschraubertraining im Allgemeinen für das Flugtraining als solches, nämlich beispielsweise zum Training längerer Flüge, eingesetzt. Sie sind jedoch nicht oder allenfalls sehr eingeschränkt dazu geeignet, spezielle Flugmanöver zu trainieren, wie sie beispielsweise bei Einsätzen im Zusammenhang mit der Bergung von Unfallopfern oder bei Rettungseinsätzen im Gebirge erforderlich sind, bei denen häufig Personen von einem Hubschrauber abgeseilt oder aufgenommen werden müssen. Zur Simulation derartiger Szenarien sind Simulatoren bekannt geworden, bei denen die Zelle eines Fluggerätes oder eine entsprechende Nachbildung am Ausleger eines Kranes oder an einer Kranbrücke hängend für das Training von Besatzungen verwendet werden.

In der DE 10 2009 019 628 B4 wird beispielsweise ein Simulator der letztgenannten Art beschrieben. Die Druckschrift betrifft einen Luftrettungs-Simulator, bei dem eine Hubschrauberfahrgastzelle an einem Kransystem, nämlich insbesondere an einem Portalkran oder an einem Brückenkran, befestigt ist. Die Hubschrauberfahrgastzelle ist hierbei an dem Kransystem über eine starre Rahmenkonstruktion befestigt, welche die Hubschrauberfahrgastzelle statisch trägt. Die Verfahrbarkeit der Teile des Kransystems und damit die Bewegung der an ihr hängenden Fahrgastzelle mit Hilfe frequenzgeregelter, hinsichtlich ihrer Geschwindigkeit stufenlos steuerbarer Antriebe ermöglicht es grundsätzlich, Flugbewegungen zu simulieren und dabei Situationen zu trainieren, in denen beispielsweise Personen oder Lasten durch eine trainierende Besatzung abgeseilt oder aufgenommen werden müssen.

Allerdings hat es sich gezeigt, dass die Möglichkeiten, in der Praxis tatsächlich vorkommende Flugbewegungen und Flugmanöver mit einem Simulator der in der vorgenannten Druckschrift beschrieben Art zu trainieren, vergleichsweise begrenzt sind. Zudem gelingt es den trainierenden Besatzungen teilweise nicht, gedanklich "auszublenden", dass sie sich in einer an einem Kran hängenden Fluggastzelle befinden und nicht in der Fluggastzelle eines realen Fluggerätes, was möglicherweise unter anderem mit den eingeschränkten Bewegungsmöglichkeiten der Fahrgastzelle und dem verwendeten Antriebskonzept zusammenhängt.

Aufgabe der Erfindung ist es, eine Lösung bereitzustellen, welche die vorgenannten Nachteile des Standes der Technik vermeidet. Hierzu soll ein Trainingssimulator bereitgestellt werden, welcher das Training vielfältiger Flugmanöver oder der sonstigen Nutzung eines Fluggerätes in einer besonders realitätsnahen Simulationsumgebung ermöglicht.

Die Aufgabe wird durch einen Trainingssimulator mit den Merkmalen des Patentanspruchs 1 gelöst. Vorteilhafte Aus- und Weiterbildungen der Erfindung sind durch die Unteransprüche gegeben.

Bei dem zur Lösung der Aufgabe vorgeschlagenen Trainingssimulator ist ein Fluggerätekörper zur Simulation von Flugmanövern und Einsatzsituationen bewegbar an einer Traverse einer Verfahreinrichtung aufgehängt. Mittels der Verfahreinrichtung ist der Fluggerätekörper in einer horizontalen Ebene frei bewegbar, wobei aber natürlich der Bewegungsradius des Fluggerätekörpers innerhalb der horizontalen Ebene entsprechend der Geometrie der ihn tragenden Verfahreinrichtung allseitig begrenzt ist. Bei dem Fluggerätekörper kann es sich, wie eingangs schon angedeutet, um den Körper eines kompletten originären oder nachgebildeten Fluggerätes oder eines Teils davon handeln. Sofern es sich bei dem Trainingssimulator um einen Simulator für das Training des Umgangs mit bemannten Fluggeräten handelt oder der Simulator hierfür hergerichtet ist, weist der Fluggerätekörper dabei eine Fluggerätezelle mit mindestens einer Kabine für den Aufenthalt einer trainierenden Besatzung auf.

Erfindungsgemäß weist die Verfahreinrichtung zur Ausführung von sich innerhalb der vorgenannten horizontalen Ebene vollziehenden Längs- und Querbewegungen des Fluggerätekörpers direkt lineare Antriebe auf. Unter direkt linearen Antrieben sollen hierbei Antriebe verstanden werden, mittels welcher die vorgenannte Verfahreinrichtung in einer Längsrichtung und in einer dazu orthogonalen Querrichtung oder, unter Überlagerung entsprechender Bewegungen, gleichzeitig in den beiden vorgenannten Richtungen stufenlos und in hoher Geschwindigkeit dynamisch bewegt werden kann, wobei die Antriebe die durch sie generierten Bewegungen im Wesentlichen ohne Zwischenschaltung richtungsverändernder Elemente auf die den Fluggerätekörper tragenden Elemente der Verfahreinrichtung übertragen. Vorzugsweise handelt es sich hierbei um elektronisch gesteuerte Elektro- oder Hydraulik-Linearmotoren.

Im Gegensatz dazu stehen Antriebskonzepte, bei denen etwa eine Drehbewegung eines möglicherweise ebenfalls elektrisch getriebenen Motors über Spindeln, Zahnstangen und dergleichen in eine translatorische Bewegung umgesetzt wird. Die bei dem erfindungsgemäßen Trainingssimulator vorgesehenen Antriebe, also vorzugsweise Linearmotoren, ermöglichen dabei eine stufenlose und dynamische Geschwindigkeitsveränderung mit hohen Beschleunigungen von bis zu 1g und darüber in alle Richtungen innerhalb der schon angesprochenen horizontalen Ebene.

Der Fluggerätekörper des vorgeschlagenen Trainingssimulators ist mit der Verfahreinrichtung über eine Lifteinrichtung verbunden, welche zumindest vertikale Bewegungen des Fluggerätekörpers relativ zu der Verfahreinrichtung ermöglicht. An diese Lifteinrichtung wiederum ist der Fluggerätekörper erfindungsgemäß über eine Tragkonstruktion und über eine mindestens zwei Freiheitsgrade aufweisende, ein Mehrachsenbewegungssystem ausbildende Bewegungskonstruktion dynamisch bewegbar und dynamisch belastbar angekoppelt. Alle Komponenten des Trainingssimulators, nämlich die Verfahreinrichtung, die Lifteinrichtung, die Tragkonstruktion sowie die den Fluggerätekörper zusammen mit Letzterer an die Lifteinrichtung ankoppelnde Bewegungskonstruktion und die Verbindungen dieser Komponenten untereinander, sind dabei derart gestaltet, dass der Fluggerätekörper aufgrund des Zusammenwirkens dieser Komponenten in Bezug auf die ihm zur Simulation von Flugmanövern ermöglichten Bewegungen über insgesamt sechs dynamisch unterstützbare physikalische Freiheitgrade verfügt. Die Formulierung, wonach der Fluggerätekörper über die Bewegungskonstruktion dynamisch bewegbar an die Lifteinrichtung angekoppelt ist, bringt dabei zum Ausdruck, dass der Fluggerätekörper nicht lediglich passiv beweglich mit der Lifteinrichtung verbunden ist, sondern an dieser auch mittels entsprechender Antriebe aktiv, das heißt dynamisch bewegbar ist. Entsprechendes gilt im Hinblick auf die sechs dynamisch unterstützbaren Freiheitsgrade des Fluggerätekörpers, dessen Bewegungen zumindest bezüglich eines oder mehrerer dieser sechs physikalischen Freiheitsgrade wahlweise entweder nur passiv ermöglicht oder - wie bevorzugt - vermittels Antrieben unterstützt werden können.

Bei dem erfindungsgemäßen Trainingssimulator handelt es sich demnach um ein 6DoF-System, also ein System mit sechs Freiheitsgraden (6DoF = six degrees of freedom). Dabei können die aktiv bewegbaren Komponenten des erfindungsgemäßen Trainingssimulators, nämlich die Verfahreinrichtung, die Lifteinrichtung und die ein Mehrachsenbewegungssystem ausbildende Bewegungskonstruktion, bezüglich aller dem Fluggerätekörper durch sie zur Verfügung gestellter Bewegungsachsen sowohl manuell gesteuert als auch in Echtzeitsimulation entsprechend dem flugdynamischen Modell des durch den Fluggerätekörper jeweils verkörperten realen Fluggerätes bewegt werden.

Nur vorsorglich sei an dieser Stelle angemerkt, dass betreffend den Sprachgebrauch des Begriffs "Freiheitsgrade" zwischen physikalischen Freiheitsgraden und technischen Freiheitsgraden unterschieden wird, wobei aus physikalischer Sicht für ein System maximal sechs Freiheitsgrade existieren. Im Vergleich dazu ist es bei einer technischen Betrachtungsweise üblich, jedes, eine Bewegung um eine Achse ermöglichende Gelenk eines Systems als einen technischen Freiheitsgrad des betreffenden Systems anzusehen.

Insoweit wird mit den vorstehenden Ausführungen zu dem erfindungsgemäßen Trainingssimulator sowie mit dessen Charakterisierung durch den Patentanspruch 1, wonach der Fluggerätekörper des Simulators über sechs physikalische Freiheitsgrade verfügt, keinerlei Aussage dazu getroffen, wie viele Drehgelenke und dergleichen beispielsweise die den Fluggerätekörper an die Lifteinrichtung ankoppelnde Bewegungskonstruktion aufweist. Details hierzu sollen im Zusammenhang mit der weiteren Erläuterung des erfindungsgemäßen Trainingssimulators auch nicht der Gegenstand weitergehender Betrachtungen sein.

Erfindungswesentlich ist es aber, wie bereits ausgeführt, dass der Fluggerätekörper des erfindungsgemäßen Trainingssimulators über sechs dynamisch unterstützbare physikalische Freiheitsgrade verfügt. Zwei dieser Freiheitsgrade, nämlich eine Bewegung in einer Längsrichtung und in einer dazu orthogonalen Querrichtung innerhalb einer horizontalen Ebene, werden für den Fluggerätekörper durch die Verfahreinrichtung bereitgestellt, an deren Traverse der Fluggerätekörper aufgehängt ist. Ein dritter Freiheitsgrad, nämlich eine Auf- und Abbewegung in vertikaler Richtung relativ zu der Traverse der Verfahreinrichtung, wird dem Fluggerätekörper durch die Lifteinrichtung ermöglicht, über welche der Fluggerätekörper mit der Verfahreinrichtung verbunden ist und bei der es sich vorzugsweise um eine Teleskopeinheit handelt. Neben der bevorzugten Ausbildung der Lifteinrichtung in Form einer Teleskopeinheit besteht auch die Möglichkeit ihrer Realisierung durch eine Gelenkarmeinheit mit einem um eine horizontale Achse beweglichen Gelenk.

Weitere zwei (dynamisch unterstützbare physikalische) Freiheitsgrade werden durch die Bewegungskonstruktion zur Verfügung gestellt, mittels welcher der Fluggerätekörper in Kombination mit einer Tragkonstruktion beweglich und dynamisch belastbar an die Lifteinrichtung angekoppelt ist. Bei den aus diesen Freiheitsgraden resultierenden Bewegungsmöglichkeiten handelt es sich um die Möglichkeit einer Kippbewegung des Fluggerätekörpers sowie um die Möglichkeit einer Schwenkbewegung um eine in horizontaler Richtung durch den Fluggerätekörper verlaufende Achse.

Der sechste (dynamisch unterstützbare) physikalische Freiheitsgrad für den Fluggerätekörper bezieht sich auf die Möglichkeit seiner Bewegung um eine vertikale Achse, wie die Längsachse der vorzugsweise die Lifteinrichtung ausbildenden Teleskopeinheit oder um eine parallel zu dieser Längsachse in vertikaler Richtung verlaufende Achse, welche auch als Gear-Bewegung bezeichnet wird. Bei allen vorgenannten Bewegungsmöglichkeiten handelt es sich nicht um lediglich passive Bewegungsmöglichkeiten, sondern um aktive, vorzugsweise - in Bezug auf die Verfahreinrichtung in jedem Fall - linearmotorisch unterstützte Bewegungsmöglichkeiten.

Demnach ist es mittels des erfindungsgemäßen Trainingssimulators möglich, den Fluggerätekörper zur Simulation unterschiedlichster Flugmanöver in gezielter Weise und unter Bereitstellung aller tatsächlich möglichen physikalischen Freiheitsgrade in unterschiedlichste Richtungen zu bewegen. Ermöglicht wird dies erfindungsgemäß insbesondere dadurch, dass der Fluggerätekörper an der Traverse der Verfahreinrichtung nicht starr, sondern über die genannte, mit der Lifteinrichtung gekoppelte Bewegungskonstruktion dynamisch aufgehängt ist. Die Bewegungskonstruktion ermöglicht dem Fluggerätekörper dabei zumindest Kipp- und Schwenkbewegungen und - je nach Ausgestaltung (siehe die nachstehenden Ausführungen) - gegebenenfalls darüber hinaus eine Gear-Bewegung. Beispielsweise kann durch die Vermittlung einer Schwenkbewegung auf den Fluggerätekörper realitätsnah ein Landemanöver für einen Hubschrauber simuliert werden, bei dem typischerweise die "Nase" der Hubschrauberzelle nach oben gezogen wird. Die direkt linearen Antriebe der Verfahreinrichtung ermöglichen hingegen bei der Simulation von Vorwärts- und Seitwärtsbewegungen sehr hohe Beschleunigungen von gegebenenfalls mehr als 1g, wie sie in der Praxis ebenfalls häufig anzutreffen sind.

Zur Erzeugung der Gear-Bewegung für den Fluggerätekörper kommen unterschiedliche Möglichkeiten in Betracht. Entsprechend einer ersten insoweit möglichen Ausbildungsform des erfindungsgemäßen Trainingssimulators wird dies dadurch erreicht, dass die Lifteinrichtung über einen Drehkranz an der Traverse der Verfahreinrichtung festgelegt ist. Durch die Lifteinrichtung und deren Anbindung an die Verfahreinrichtung werden somit für den Fluggerätekörper zwei physikalische Freiheitsgrade bereitgestellt. Neben der schon genannten, relativ zur Traverse der Verfahreinrichtung ermöglichten Auf- und Abbewegung in vertikaler Richtung ermöglicht dabei der Drehkranz eine rotative Bewegung des Fluggerätekörpers um eine vertikale Achse, wie um eine der Längsachse der vorzugsweise als Lifteinrichtung vorgesehenen Teleskopeinheit entsprechende, gedachte vertikale Achse, nämlich die Gear-Bewegung. Bei der mit der Tragkonstruktion verbundenen, den Fluggerätekörper beweglich und dynamisch belastbar mit der Lifteinrichtung koppelnden Bewegungskonstruktion kann es sich in diesem Fall um ein sogenanntes Hexapod handeln, eine Bewegungsmechanik mit 6 Antrieben, wie 6 Elektrozylindern, beispielsweise 6 Elektromotoren mit einer Antriebsspindel.

Gemäß einer alternativen Ausbildungsform des Trainingssimulators wird hingegen die Gear-Bewegung durch die dafür speziell gestaltete Bewegungskonstruktion ermöglicht, über welche der Fluggerätekörper in Kombination mit der Tragkonstruktion an die Lifteinrichtung angekoppelt ist. Die Bewegungskonstruktion stellt bei dieser Ausbildungsform nicht lediglich die im Patentanspruch 1 genannten (mindestens) zwei Freiheitsgrade zur Verfügung, sondern mindestens drei Freiheitsgrade, genauer gesagt drei dynamisch unterstützbare physikalische Freiheitsgrade. Die Bewegungskonstruktion ermöglicht es dabei, gegebenenfalls gleichzeitig aktiv eine Nickbewegung, eine Schwenkbewegung und eine Gear-Bewegung an den Fluggerätekörper zu vermitteln. Auch in diesem Kontext ist es jedoch korrekt, davon zu sprechen, dass die Bewegungskonstruktion mindestens drei Freiheitsgrade für den Fluggerätekörper zur Verfügung stellt.

Jenseits der Frage einer Unterscheidung zwischen physikalischen und technischen Freiheitsgraden gilt dies, zumal gegebenenfalls auch die Bewegungskonstruktion - in Abhängigkeit von ihrer konkreten Ausbildung - zusätzlich zu der Verfahreinrichtung eine der Bewegung der Verfahreinrichtung überlagerte horizontale (längs und/oder quer) und/oder eine der Lifteinrichtung überlagerte vertikale Bewegung des Fluggerätekörpers ermöglichen kann. Ungeachtet dessen, dass der Trainingssimulator insgesamt, wie bereits ausgeführt, ein 6DoF-System darstellt, kann es sich insoweit auch bei der zwischen dem Fluggerätekörper und der Lifteinrichtung angeordneten Bewegungskonstruktion bereits selbst um ein 6DoF-System handeln.

Unabhängig davon, wie der die Gear-Bewegung ermöglichende Freiheitsgrad dem Fluggerätekörper vermittelt wird - also ob dies durch einen Drehkranz der Lifteinrichtung oder vermittels einer entsprechend gestalteten, den Fluggerätekörper gemeinsam mit der Tragkonstruktion an die Lifteinrichtung koppelnden Bewegungskonstruktion erfolgt - ermöglicht der erfindungsgemäße Trainingssimulator dem Fluggerätekörper jedenfalls eine hochdynamische Drehbewegung um eine vertikale Achse. Ebenfalls unabhängig von der für die Bereitstellung der Gear-Bewegung gewählten Ausbildungsform ist der erfindungsgemäße Trainingssimulator entsprechend einer bevorzugten Weiterbildung derart ausgebildet, dass der Fluggerätekörper lösbar und somit austauschbar gegen einen anderen Fluggerätekörper an die Lifteinrichtung angekoppelt ist. Hierdurch ist die Möglichkeit gegeben, Besatzungen in Bezug auf unterschiedliche Luftfahrzeugarten, aber beispielsweise auch für den Umgang mit Hubschraubern unterschiedlichen Typs, zu trainieren.

Auch hinsichtlich der grundsätzlichen Ausgestaltung der Verfahreinrichtung, an deren Traverse der Fluggerätekörper aufgehängt ist, sind unterschiedliche Möglichkeiten gegeben. Entsprechend einer insoweit möglichen Ausbildungsform wird dabei eine Schlitteneinheit (Linearschlitten beziehungsweise Linearschlittensystem) entlang zweier voneinander beabstandeter, paralleler, aufgestelzter Schienen beweglich geführt und mittels eines entsprechenden direkt linearen Antriebs aktiv bewegt. Die Bewegung der Schlitteneinheit entlang der aufgestelzten Schienen soll dabei als Längsbewegung aufgefasst werden. Eine dazu in derselben Ebene quer gerichtete Bewegung wird durch direkt lineare Antriebe erreicht, vermittels welcher der Fluggerätekörper entlang der bei dieser Ausbildungsform die Traverse ausbildenden Schlitteneinheit bewegbar ist, an welche er entweder über einen Drehkranz oder starr über die ihrerseits Bewegungen in vertikaler Richtung vermittelnde Lifteinrichtung festgelegt ist.

Eine hierzu alternative Ausbildungsform stellt die Ausbildung der Verfahreinrichtung in Form eines Portals dar. Dabei werden mittels entsprechender Antriebe zwei zueinander beabstandete Portalstützen auf am Boden angeordneten Schienen bewegt, was wiederum der Bewegung in Längsrichtung entspricht. Die beiden Portalstützen sind durch ein Portaljoch miteinander verbunden, an welchem wiederum der Fluggerätekörper über die Lifteinrichtung sowie die Trag- und Bewegungskonstruktion aufgehängt ist. Entsprechende, die Lifteinrichtung an dem Portaljoch festlegende Mittel sind hierbei zur Vermittlung einer Querbewegung mittels direkt linearer Antriebe entlang des die Traverse ausbildenden Portaljochs bewegbar.

Die bereits mehrfach erwähnte Tragkonstruktion zur Ankopplung des Fluggerätekörpers an die Lifteinrichtung ist vorzugsweise dazu ausgebildet, neben der die mindestens zwei Freiheitsgrade für den Fluggerätekörper vermittelnden Bewegungskonstruktion weitere, den Trainingssimulator im Hinblick auf eine möglichst realitätsnahe Simulation ergänzende Komponenten zu tragen. Hierbei kann es sich beispielsweise um eine Windanlage handeln, welche dazu dient, Luftbewegungen und/oder gegebenenfalls auch böigen Wind zu simulieren. So können mittels einer solchen Windanlage beispielsweise auch durch die Rotoren eines Hubschraubers entstehende, auf den Fluggerätekörper wirkende starke Luftverwirbelungen simuliert werden. Gegebenenfalls kann dieses noch durch die Simulation entsprechender Rotorgeräusche mittels einer dafür an der Tragkonstruktion befestigten Geräuschanlage, wie zum Beispiel einer Soundanlage oder einer Körperschallanlage, unterstützt werden.

Ferner können an der Tragkonstruktion Scheinwerfer angebracht sein, wie sie auch bei zu Rettungseinsätzen benutzten Hubschraubern anzutreffen sind, oder welche dazu genutzt werden, verschiedene auch im praktischen Einsatzfall auftretende Lichteinflüsse, etwa Lichtreflektionen und dergleichen, wie sie zum Beispiel durch die Sonne oder sonstige Wettereinflüsse verursacht werden, zu erzeugen. Die Tragkonstruktion kann unabhängig von den durch sie getragenen Elementen unterschiedlich gestaltet sein. Entsprechend einer insoweit vorgesehenen Ausbildungsform besteht sie hierbei aus einem unmittelbar mit der Lifteinrichtung starr verbundenen Tragwerk, welches vorzugsweise insbesondere der Befestigung der Bewegungskonstruktion sowie der für diese Bewegungskonstruktion zur Ausführung aktiver Bewegungen benötigten Antriebe und für die Steuerung dieser Antriebe benötigter Steuereinheiten dient. Ferner können an diesem Tragwerk die schon zuvor erwähnten ergänzenden Komponenten, wie insbesondere eine Windanlage, befestigt sein. Ein zweiter, an den abseitigen Enden der Bewegungskonstruktion befestigter Teil der Tragkonstruktion ist bei dieser Ausbildungsform gemäß einer besonders bevorzugten Ausgestaltung als ein Wechselträger oder Wechselrahmen ausgebildet, welcher insbesondere der austauschbaren Befestigung verschiedener Fluggerätekörper dient.

Im Hinblick auf den eingangs genannten bevorzugten Einsatzzweck handelt es sich bei dem Fluggerätekörper beziehungsweise bei wenigstens einem Fluggerätekörper des Trainingssimulators um eine Hubschrauberzelle, wobei hierfür eine originäre, ursprünglich tatsächlich einen Bestandteil eines entsprechenden Fluggerätes ausbildende Hubschrauberzelle oder die Nachbildung einer solchen verwendet werden kann. Unabhängig davon, ob der Fluggerätekörper eine originäre Zelle eines Fluggerätes, wie eine Hubschrauberzelle, oder eine Nachbildung einer solchen ist, ist der erfindungsgemäße Trainingssimulator jedenfalls so gestaltet, dass er allen internationalen Zulassungsbestimmungen oder gegebenenfalls nationalen Zulassungsbestimmungen seines jeweiligen Einsatzortes entspricht, die beispielsweise im Rahmen internationaler Richtlinien, wie ICAO, EASA, JAR, FAA oder auch CAAC, bestehen.

Bei einer Ausbildungsform mit einer Hubschrauberzelle als Fluggerätekörper kann der betreffende Fluggerätekörper zudem mindestens eine Abseileinrichtung zum Abseilen oder Hochhieven einer Person oder einer Last aufweisen. Hierdurch können realitätsnah mittels Hubschrauber erfolgende Rettungseinsätze simulatorisch trainiert werden. Bei einer Alternative zur Ausstattung des Fluggerätekörpers mit einer oder mehreren Abseileinrichtungen ist der Fluggerätekörper, nämlich insbesondere dessen hinterer Teil, mit Mitteln ausgestattet, welche die Simulation eines Abseilvorgangs oder des Hochhievens einer Person oder einer Last unter Nutzung der Prinzipien der Virtual Reality ermöglichen. Hierbei ist der hintere Teil des Fluggerätekörpers beziehungsweise der Fluggerätezelle beispielsweise mit einer Cube (Blue oder Green-Screen) ausgerüstet oder der Fluggerätekörper in eine solche Cube (Blue oder Green-Screen) eingeschoben.

An der Unterseite des Fluggerätekörpers kann ferner ein Landegestell angeordnet sein. Sofern es sich bei dem Fluggerätekörper um eine Hubschrauberzelle handelt, kann diese zur Erhöhung der Realitätsnähe um an ihrer Unterseite als Landegestell angebrachte Kufen und/oder noch um einen im Heckbereich angebrachten Heckrotor ergänzt sein. Bei einem solchen Heckrotor kann es sich je nach gewünschter praktischer Umsetzung der Erfindung lediglich um eine Attrappe oder aber vorzugsweise um einen, beispielsweise mittels eines eigenen Antriebs, bewegbaren Heckrotor handeln.

Insbesondere Ausbildungsformen, wie sie vorstehend zuletzt beschrieben wurden, ermöglichen, neben dem schon beispielhaft genannten Rettungstraining, das Training unterschiedlichster Einsatzkräfte von Polizei, Feuerwehr, technischem Hilfswerk und sonstigen Organisationen und Institutionen sowie auch die Durchführung militärischer Trainings in einer Simulationsumgebung. Trainiert werden können hierbei Fähigkeiten wie etwa Fast Rooping, Gebäude-Evakuierung oder -Erstürmung, Absetzen von Sondereinsatz-Kräften und -Mitteln, Landetraining am Boden oder auch auf Schiffdecks mit beweglicher Landeplattform und dergleichen mehr.

Nachfolgend sollen anhand von Zeichnungen Beispiele für mögliche Ausgestaltungsformen der Erfindung gegeben werden. Die Zeichnungen zeigen im Einzelnen:
- Fig. 1:: wesentliche Komponenten einer möglichen Ausbildungsform des erfindungsgemäßen Trainingssimulators,
- Fig. 2:: eine räumliche Ansicht der Ausbildungsform des Trainingssimulators gemäß Fig. 1 in der Totalen.

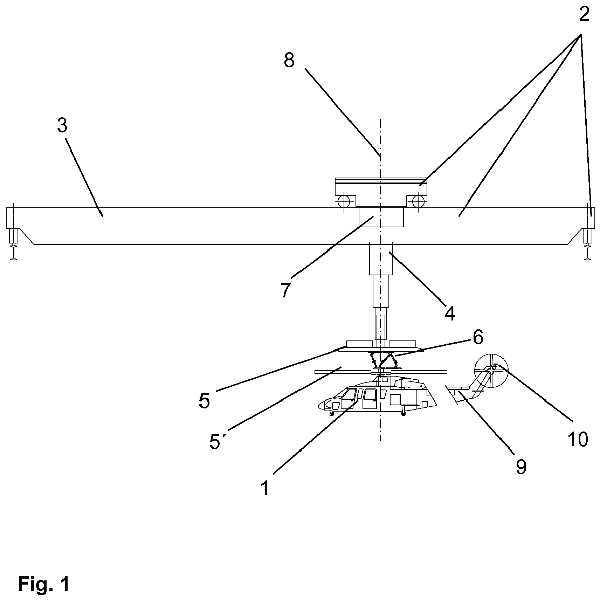

Die Fig. 1 zeigt wesentliche Komponenten einer möglichen Ausbildungsform des erfindungsgemäßen Trainingssimulators. Der Trainingssimulator besteht demnach im Wesentlichen aus dem Fluggerätekörper 1, welcher an der Traverse 3 einer Verfahreinrichtung 2 aufgehängt ist, wobei es sich in dem gezeigten Beispiel bei dem Fluggerätekörper 1, wie klar erkennbar ist, um eine Hubschrauberzelle handelt. Bei der in der Fig. 1 nur ausschnittsweise gezeigten Verfahreinrichtung 2 handelt es sich um eine Verfahreinrichtung 2 nach dem Brückenprinzip, bei welcher eine in diesem Falle die Traverse 3 ausbildende Schlitteneinheit in der Längsrichtung (aus der Zeichnungsebene heraus oder in die Zeichnungsebene hinein) entlang aufgestelzter, hier nur angedeuteter Schienen mittels entsprechender, nicht gezeigter Antriebe bewegt wird. Quer dazu, nämlich entlang der durch die Schlitteneinheit gebildeten Traverse 3, sind Tragkomponenten, welche die der Vermittlung von vertikalen Bewegungen dienende Lifteinrichtung 4 - hier eine Teleskopeinheit - tragen, mittels (wiederum nicht gezeigter) direkt linearer Antriebe bewegbar.

An diesen Elementen der Verfahreinrichtung 2 und somit an deren Traverse 3 ist die Lifteinrichtung 4 mittels eines - hier nicht im Detail gezeigten - Drehkranzes 7 festgelegt, mit dessen Hilfe über die Lifteinrichtung 4 und eine der Befestigung des Fluggerätekörpers 1 dienende Kombination aus einer Tragkonstruktion 5, 5'und einer Bewegungskonstruktion 6 eine Gear-Bewegung auf den Fluggerätekörper 1 vermittelbar ist. Die angedeutete Bewegungskonstruktion 6 mit mehreren elektromotorischen Antrieben - mit vorzugsweise Elektromotoren und Spindeln - stellt zwei physikalische Freiheitsgrade für die Bewegung des an ihr mittels eines unteren Teils der Tragkonstruktion 5, 5', nämlich mittels eines Wechselrahmens 5', lösbar befestigten Fluggerätekörpers 1 zur Verfügung. Durch ein entsprechendes, den oberen Teil der Tragkonstruktion 5, 5' ausbildendes Tragwerk 5 wird die Bewegungskonstruktion 6 an der Lifteinrichtung 4 gehalten.

Das betreffende Tragwerk 5 trägt ferner die zur Betätigung der Bewegungskonstruktion 6 erforderlichen (nicht gezeigten) Antriebe sowie entsprechende (ebenfalls nicht gezeigte), diese steuernde Steuereinheiten. Ferner kann durch das Tragwerk 5 eine hier ebenfalls nicht gezeigte Anlage zur Simulation durch den Rotor eines Hubschraubers entstehender Luftverwirbelungen getragen werden. Um die Simulation möglichst realitätsnah erscheinen zu lassen, ist zudem im Heckbereich an einer Heckverlängerung 9 der Hubschrauberzelle ein Heckrotor 10 angeordnet, dessen Vorhandensein unter anderem im Falle eines Trainings von Abseilvorgängen oder der Aufnahme von Personen oder Lasten zur Erreichung eines realitätsnahen Eindrucks von Vorteil ist.

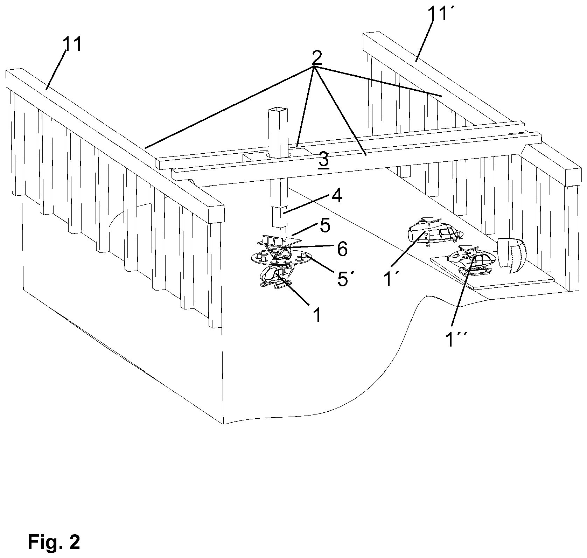

Die Fig. 2 zeigt die Ausbildungsform der Fig. 1 nochmals in einer räumlichen Gesamtansicht. Hier besser zu erkennen ist die in diesem Ausführungsbeispiel gewählte Ausbildungsvariante für die Verfahreinrichtung 2. Diese besteht demnach, wie ersichtlich, aus zwei zueinander beabstandeten, aufgestelzten Schienen 11, 11', entlang welcher eine in diesem Falle gleichzeitig die Traverse 3 der Verfahreinrichtung ausbildende Schlitteneinheit mittels entsprechender (nicht gezeigter) Antriebe bewegbar ist. In dieser Darstellung klar erkennbar, handelt es sich bei dem hier veranschaulichten Beispiel des erfindungsgemäßen Trainingssimulators um eine Ausbildungsform, bei welcher der Fluggerätekörper 1 austauschbar durch andere Fluggerätekörper 1', 1" lösbar an der mit der Traverse 3 verbundenen Lifteinrichtung 4 befestigt ist.

## Patentansprüche

1. Trainingssimulator für ein Fluggerät, mit einem bewegbaren Fluggerätekörper (1), der aufgehängt ist an einer Traverse (3) einer Verfahreinrichtung (2), mittels welcher der Fluggerätekörper (1) in einer horizontalen Ebene frei bewegbar ist, wobei der Fluggerätekörper (1) mit der Verfahreinrichtung (2) über eine Lifteinrichtung (4) verbunden ist, welche zumindest vertikale Bewegungen des Fluggerätekörpers (1) relativ zu der Traverse (3) der Verfahreinrichtung (2) ermöglicht, **dadurch gekennzeichnet,**
- **dass** die Verfahreinrichtung (2) zur Ausführung von Längs- und Querbewegungen des Fluggerätekörpers (1) innerhalb der horizontalen Ebene direkt lineare Antriebe aufweist und
- **dass** der Fluggerätekörper (1) an die Lifteinrichtung (4) über eine Tragkonstruktion (5, 5') und über eine mindestens zwei Freiheitsgrade für den Fluggerätekörper (1) zur Verfügung stellende Bewegungskonstruktion (6) dynamisch bewegbar und belastbar angekoppelt ist und
- **dass** der Fluggerätekörper (1) in Bezug auf die ihm zur Simulation von Flugmanövern ermöglichten Bewegungen über insgesamt sechs dynamisch unterstützbare physikalische Freiheitsgrade verfügt.

2. Trainingssimulator nach Anspruch 1, **dadurch gekennzeichnet, dass** die Lifteinrichtung (4) durch eine Teleskopeinheit ausgebildet ist.

3. Trainingssimulator nach Anspruch 1 oder 2, **dadurch gekennzeichnet, dass** der Fluggerätekörper (1) lösbar und austauschbar gegen einen anderen Fluggerätekörper (1', 1 ") an die Lifteinrichtung (4) angekoppelt ist.

4. Trainingssimulator nach einem der Ansprüche 1 bis 3, **dadurch gekennzeichnet, dass** es sich bei den direkt linearen Antrieben der Verfahreinrichtung (2) um elektrische oder um hydraulisch betriebene Linearmotoren handelt.

5. Trainingssimulator nach einem der Ansprüche 1 bis 4, **dadurch gekennzeichnet, dass** die Verfahreinrichtung (2) besteht aus zwei voneinander beabstandeten, parallel verlaufenden, aufgestelzten Schienen (11, 11') und einer die Traverse (3) ausbildenden, mittels mindestens eines direkt linearen Antriebs auf den Schienen (11, 11') bewegten Schlitteneinheit, entlang welcher die den Fluggerätekörper (1) mit der Verfahreinrichtung (2) verbindende Lifteinrichtung (4) mittels mindestens eines direkt linearen Antriebs quer zu den Schienen (11, 11 ') der Verfahreinrichtung (2) bewegbar ist.

6. Trainingssimulator nach einem der Ansprüche 1 bis 4, **dadurch gekennzeichnet, dass** die Verfahreinrichtung (2) als ein Portal ausgebildet ist und aus zwei Portalstützen und einem die Portalstützen miteinander verbindenden, die Traverse (3) ausbildenden Portaljoch besteht, wobei die Portalstützen mittels mindestens eines linear direkten Antriebs entlang am Boden vorgesehener Schienen und die Lifteinrichtung (4) mit dem daran über die Tragkonstruktion (5, 5') und die Bewegungskonstruktion (6) befestigten Fluggerätekörper (1) mittels eines linear direkten Antriebs entlang des Portaljochs bewegbar ist.

7. Trainingssimulator nach einem der Ansprüche 1 bis 6, **dadurch gekennzeichnet, dass** die den Fluggerätekörper (1) mit der Traverse (3) der Verfahreinrichtung (2) verbindende Lifteinrichtung (4) über einen Drehkranz (7) an der Traverse (3) festgelegt ist.

8. Trainingssimulator nach einem der Ansprüche 1 bis 6, **dadurch gekennzeichnet, dass** die Bewegungskonstruktion (6) dem Fluggerätekörper (1) eine Rotationsbewegung um die Längsachse der Lifteinrichtung (4) oder um eine parallel zu dieser Längsachse in vertikaler Richtung verlaufende Achse (8) ermöglicht und somit mindestens drei dynamisch unterstützbare physikalische Freiheitsgrade für den Fluggerätekörper (1) zur Verfügung stellt.

9. Trainingssimulator nach Anspruch 8, **dadurch gekennzeichnet, dass** die Bewegungskonstruktion (6) drei bis sechs dynamisch unterstützbare physikalische Freiheitsgrade für den Fluggerätekörper (1) zur Verfügung stellt.

10. Trainingssimulator nach einem der Ansprüche 1 bis 9, **dadurch gekennzeichnet, dass** durch die Tragkonstruktion (5, 5') eine oberhalb des Fluggerätekörpers (1) angeordnete Windanlage gehalten wird.

11. Trainingssimulator nach einem der Ansprüche 1 bis 10, **dadurch gekennzeichnet, dass** die Tragkonstruktion (5, 5') aus einem oberen Tragwerk (5) und aus einem unteren Wechselrahmen (5') besteht, wobei an dem Tragwerk (5) die dynamisch belastbare Bewegungskonstruktion (6), aktive Bewegungen des Fluggerätekörpers (1) bewirkende Antriebskomponenten der Bewegungskonstruktion sowie Einheiten zur Steuerung dieser Antriebskomponenten befestigt sind und wobei an dem Wechselrahmen der Fluggerätekörper (1) lösbar und austauschbar gegen einen anderen Fluggerätekörper (1', 1") befestigt ist.

12. Trainingssimulator nach einem der Ansprüche 1 bis 11, **dadurch gekennzeichnet, dass** der Fluggerätekörper (1) ein Hubschrauber oder eine Hubschrauberzelle als Teil eines Hubschraubers ist, bei welchem es sich um ein originäres Fluggerät oder um die Nachbildung eines solchen handelt.

13. Trainingssimulator nach Anspruch 12, **dadurch gekennzeichnet, dass** der Fluggerätekörper (1) eine Heckverlängerung (9) mit einem daran befestigten Heckrotor (10) aufweist.

14. Trainingssimulator nach einem der Ansprüche 1 bis 13, **dadurch gekennzeichnet, dass** der Fluggerätekörper (1) eine Fluggerätezelle mit mindestens einer Kabine für den Aufenthalt einer trainierenden Besatzung aufweist.

15. Trainingssimulator nach Anspruch 14, **dadurch gekennzeichnet, dass** die Fluggerätezelle des Fluggerätekörpers (1) mindestens eine Abseileinrichtung zum Abseilen oder Hochhieven einer Person oder einer Last aufweist.
